# EUROPEAN PATENT SPECIFICATION

(11) **EP 3 302 884 B1**
(45) Date of publication and mention of the grant of the patent: **29.07.2020**
(21) Application number: 16804498.0
(22) Date of filing: 03.06.2016
(51) Int. Cl.: B25B 23/14, B23B 45/00, B23B 45/02, B25B 21/00, B25B 23/00, B25D 17/00

(54) **POWER TOOL WITH USER INTERFACES**
ELEKTROWERKZEUG MIT BENUTZERSCHNITTSTELLE
MACHINE-OUTIL ÉLECTRIQUE AVEC INTERFACE UTILISATEUR

(30) Priority: 05.06.2015 US 201562171673 P
(43) Date of publication of application: 11.04.2018
(73) Proprietor: Ingersoll-Rand Industrial U.S., Inc., Davidson, NC 28036 (US)
(72) Inventor: BARTOSZEK, Jason Christopher, Bethlehem, Pennsylvania 18020 (US); MADINENI, Vikram, Somerset, New Jersey 08873 (US); JOHNSON, Joshua Odell, Allentown, Pennsylvania 18104 (US); ELY, Sean C., Flemington, New Jersey 08822 (US); LEAVITT, Douglas Fornell, Bethlehem, Pennsylvania 18017 (US)
(74) Representative: Haseltine Lake Kempner LLP
(86) International application number: PCT/US2016/035665
(87) International publication number: WO 2016/196891

(56) References cited:
- EP-A1- 1 426 989
- WO-A2-01/54865
- GB-A- 752 251
- GB-A- 2 514 261
- US-A- 2 858 701
- US-A- 3 440 465
- US-A- 3 894 254
- US-A- 5 105 130
- US-A- 5 998 897
- US-B1- 6 691 796
- US-B2- 7 236 243
- US-B2- 7 322 427
- US-B2- 8 267 924

## Description

### TECHNICAL FIELD AND SUMMARY

The present disclosure relates, generally, to user interfaces for power tools and, more particularly, to a hand-held power tool according to the preamble of claim 1 comprising a user interface for selecting various modes of operation of the power tool.

Such a hand-held power tool is known from US 3 440 465 A.

User interfaces for power tools sometimes include controls for regulating power supplied to electric motors of the power tools. For instance, such user interfaces may include one or more switches or knobs that are movable between positions to adjust the power supplied to the electric motor. Some power tools may include features that guide movement of the switches between the positions and provide feedback to a user regarding the positional state of the switches. Such features are typically provided entirely on the power tool housings. Providing such features on components of electric power tools other than power tool housings may reduce the size of the power tools, and therefore provide packaging benefits, among other benefits.

Accordingly, the present invention provides a hand-held power tool according to claim 1. The power tool comprises a housing assembly, an output spindle, a motor endbell, and a user interface. The housing assembly supports an electric motor having a rotor configured to rotate when the electric motor is supplied with power. The output spindle protrudes from an output end of the housing assembly, and is functionally coupled to the rotor such that the output spindle rotates in response to a rotation of the rotor. The motor endbell is located on the housing assembly adjacent the electric motor and opposite the output spindle. The user interface is located on the motor endbell opposite the output spindle and is configured to select one of a plurality of modes of operation of the hand-held power tool to regulate the power supplied to the electric motor. The user interface also includes a control knob accessible from exterior of the housing assembly. The control knob is rotatable about a knob axis to a plurality of mode positions that control a plurality of operation modes.

In a preferred embodiment the control knob also includes a lever that is configured to be pivoted by a hand. Preferably the motor endbell further includes piloting features located adjacent to and interact with the control knob to guide rotation of the control knob relative to the housing assembly about the knob axis to the plurality of mode positions. The piloting features include an arcuate guide about which the control knob rotates such that the control knob cooperatively defines the shape of the arcuate guide. Preferably the motor endbell further includes indexing features located on the arcuate guide as a plurality of selective stops. Each of the plurality of selective stops is configured to interact with at least one arm on the control knob to provide haptic feedback when the control knob is rotated to each of the plurality of selective stops to define the plurality of mode positions and indicate the positional states of the control knob corresponding to the plurality of operation modes.

In the above and other embodiments of the present disclosure may also comprise: the at least one arm being a plurality of arms; the plurality of selective stops being a plurality of detents; the motor endbell being configured to position the rotor relative to a stator of the electric motor; the arcuate guide of the endbell including two end stops with the plurality of selective stops located between the two end stops; the arcuate guide being circular; the plurality of detents interconnects with and extends radially outward from the knob axis, and the detents are spaced apart from each other; the arcuate guide includes a reduced radius section with respect to the knob axis at a location adjacent the plurality of detents; the knob axis is located parallel to an axis of rotation of the rotor; the control knob axis is located coincident to an axis of rotation of the rotor; the control knob is also located adjacent to a cap configured to shroud an interior space at an end of the hand-held power tool opposite the output end, wherein the control knob is rotatable relative to the cap to the plurality of mode positions; the control knob being rotatable to select one of the plurality of operation modes to regulate a maximum power supplied to the electric motor when a trigger, spaced apart from the control knob, is depressed; the plurality of operation modes being selected from the group consisting of a first power level, a second power level that is greater than the first power level, a third power level which is greater than the second power level, and a fourth power level that is greater than the third power level; the control knob including an arcuate exterior wall that extends at least partway around the knob axis and is connected to first and second interior walls, wherein an inner surface of the arcuate exterior wall is also connected to an outer surface of the first interior wall and to an outer surface of the second interior wall, wherein opposite ends of the arcuate exterior wall extend radially inward toward the knob axis to connect to the outer surfaces of the first and second interior walls, respectively, and wherein the inner surface of the arcuate exterior wall is spaced apart from and positioned radially outward of the outer surfaces of the first and second interior walls between the opposite ends of the arcuate exterior wall; the control knob including an interior cavity, wherein the piloting and indexing features of the endbell are received in the interior cavity; the at least one arm are first and second arms each configured to engage one of the selective stops that define the plurality of mode positions for the control knob to provide feedback indicating the positional state of the control knob at one of the plurality of operation modes; and the first and second arms are cantilevered arms coupled to the control knob and extend radially inward therefrom toward the knob axis, wherein when the control knob being rotated to one of the plurality of mode positions, wherein interference causes the first and second arms to be deflected radially outward away from the knob axis such that the deflection is detectable by the hand touching the control knob which provide the haptic feedback indicating the positional state of the control knob.

Another illustrative embodiment of the present disclosure provides a hand-held power tool which comprises a housing assembly, an output spindle, a motor endbell, an electric motor, and a user interface. The housing assembly supports the electric motor having a rotor configured to rotate when the electric motor is supplied with power. The output spindle protrudes from an output end of the housing assembly and is functionally coupled to the rotor such that the output spindle rotates in response to a rotation of the rotor. The motor endbell is located on the housing assembly adjacent the electric motor and opposite the output spindle. The user interface is located on the motor endbell opposite the output spindle and is configured to select one of a plurality of modes of operation of the hand-held power tool to regulate power supplied to the electric motor.

In the above and other embodiments of the present disclosure may also comprise: the control knob includes a lever that is configured to be pivoted by a hand; the motor endbell including piloting features located adjacent to and interact with the control knob to guide rotation of the control knob relative to the housing assembly about the knob axis to the plurality of mode positions, wherein the piloting features include an arcuate guide about which the control knob rotates such that the control knob cooperatively defines the shape of the arcuate guide; the motor endbell further includes indexing features located on the arcuate guide as a plurality of selective stops, wherein each of the plurality of selective stops being configured to interact with at least one arm on the control knob to provide haptic feedback when the control knob is rotated to the plurality of selective stops to define the plurality of mode positions which indicate positional states of the control knob corresponding to the plurality of operation modes; the endbell including a piloting feature that includes a slot configured to receive a corresponding key on the control knob, wherein as the control knob is rotated between the plurality of mode positions.

Another illustrative embodiment of the present disclosure provides a hand-held power tool which comprises a housing assembly, an output spindle, and a user interface. The housing assembly supports an electric motor having a rotor configured to rotate when the electric motor is supplied with power. The output spindle protrudes from an output end of the housing assembly and is functionally coupled to the rotor such that the output spindle rotates in response to a rotation of the rotor. The user interface is located at the housing assembly opposite the output spindle and is configured to select one of a plurality of modes of operation of the hand-held power tool 10 to regulate power supplied to the electric motor. The user interface is accessible from exterior of the housing assembly.

### BRIEF DESCRIPTION OF THE DRAWINGS

The concepts described in the present disclosure are illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels may be repeated among the figures to indicate corresponding or analogous elements.
FIG. 1 is a side elevation view of an illustrative power tool including a tool housing;
FIG. 2 is a perspective view of a user interface provided on a rear portion of the tool housing of the power tool of FIG. 1 with remaining portions of the tool housing omitted for the sake of clarity;
FIG. 3 is a magnified sectional view, taken about line 3-3 of FIG. 2, of various components supported by the rear portion of the tool housing including an electric motor; and
FIG. 4 is a magnified sectional view, taken about line 4-4 of FIG. 2, of various piloting and indexing features provided on a component of the electric motor that interfaces with the user interface.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the present invention to the particular forms disclosed, but on the contrary, the intention is to cover all modifications, equivalents, and alternatives falling within the scope of the present invention as defined by the claims.

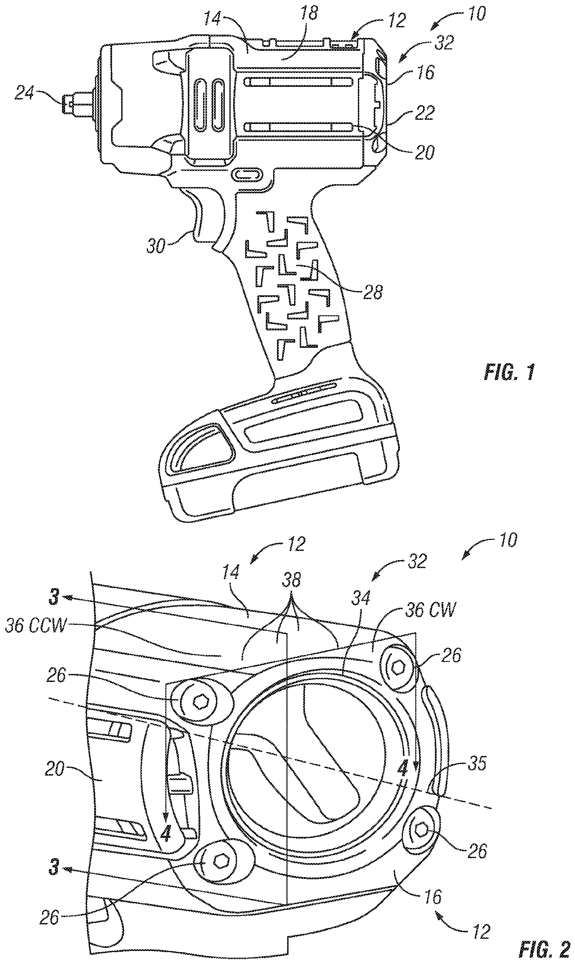

Referring now to FIG. 1, an illustrative power tool 10 is shown. The power tool 10 is illustratively embodied as a cordless, electric power tool (in particular, an electric, pistol-style impact tool). In various embodiments, the power tool 10 may be embodied as a pistol-grip impact tool, an in-line impact tool, or an angle impact tool, such as a right-angle impact tool. It should be appreciated, however, that in other embodiments, the power tool may be embodied as a cordless, electric power tool that does not include an impact mechanism, such as an electric drill, drill driver, ratchet, saw, or the like.

The illustrative power tool 10 as shown in FIG. 1 also includes a tool housing 12. Tool housing 12 includes a body 14 and a cap 16. The body 14 defines an interior space 18 in which an electric motor 20 of the tool 10 is positioned. The cap 16 is coupled to the body 14 when the tool 10 is assembled to close off the interior space 18 and define an end 22 that is positioned opposite an output end 24 of the tool 10. The cap 16 is coupled to the body 14 using fasteners 26 (best seen in FIG. 2) that extend through the cap 16 and into the interior space 18.

The tool housing 12 defines a handle 28 on which a trigger 30 is provided as shown in FIG. 1. The trigger 30 is used to turn the electric motor 20 on/off in use of the tool 10. A user interface 32 spaced from the trigger 30 is also provided on the housing 12, specifically on the cap 16, as best seen in FIG. 2. In the illustrative embodiment, the user interface 32 is used to select one of a plurality of modes of operation of the power tool 10. For instance, in some embodiments, the user interface 32 may be used to select a particular mode of operation from among those described in U.S. Provisional Patent Application Serial No. 62/171,504, filed June 5, 2015. In other embodiments, the user interface 32 may simply regulate the maximum power supplied to the electric motor 20 when the trigger 30 is fully depressed in use of the tool 10.

Referring now to FIG. 2, the user interface 32 is shown in greater detail. The user interface 32 is supported by the tool housing 12 and is illustratively embodied as, or otherwise includes, a control knob 34. It should be appreciated, however, that in other embodiments, which are not according to the invention, the user interface 32 may be embodied as a dial, push button, switch, or other control, and the dial, push button, switch, or other control, as well as components associated therewith, may be supported by the tool housing 12.

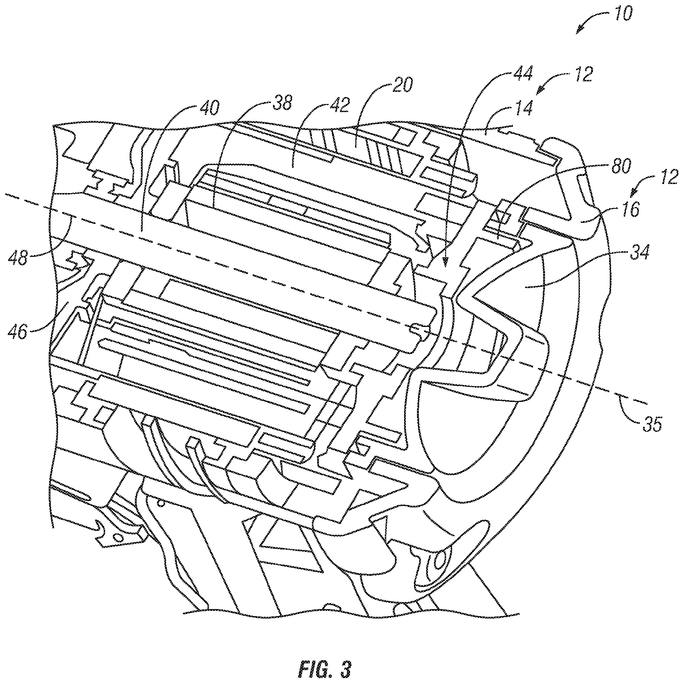

The control knob 34 is accessible from the exterior of the tool housing 12, and the control knob 34 is engaged with the cap 16 (best seen in FIG. 3) and rotatable relative thereto about a knob axis 35 between a number of mode positions 36. Operation of the electric motor 20 when the control knob 34 is in one of the mode positions 36 is different from the operation of the electric motor 20 when the control knob 34 is in any of the other mode positions 36. In the illustrative embodiment, the mode positions 36 include four different positions. It should be appreciated, however, that in other embodiments, the control knob 34 may be moved between more or less than four mode positions 36. It is also contemplated that, in other embodiments, the position of the control knob 34 may be used to control other features and/or functions of the power tool 10 (additionally or alternatively to control of the motor 20).

Referring now to FIG. 3, the body 14 and the cap 16 of the tool housing 12 are broken away to show components of the electric motor 20. The electric motor 20 is illustratively embodied as a brushless DC electric motor. The electric motor 20 includes a rotor 38 configured to drive an output shaft 40 to output mechanical power and a stationary component (i.e., a stator) 42 that extends around the rotor 38.

The motor 20 also includes an endbell 44 that abuts the control knob 34 and an endbell 46 that is spaced from the endbell 44 and positioned closer to the output end 24 of the tool 10 than the endbell 44, as shown in FIG. 3. The rotor 38 and the stator 42 are positioned between the endbells 44, 46. The endbells 44, 46 cooperate to align the rotor 38 and the stator 42 so that the rotor 38 and the stator 42 extend parallel to a central axis 48 of the motor 20. The central axis 48 is illustratively parallel to the knob axis 35, and in some embodiments, the central axis 48 and the knob axis 35 may be coaxial.

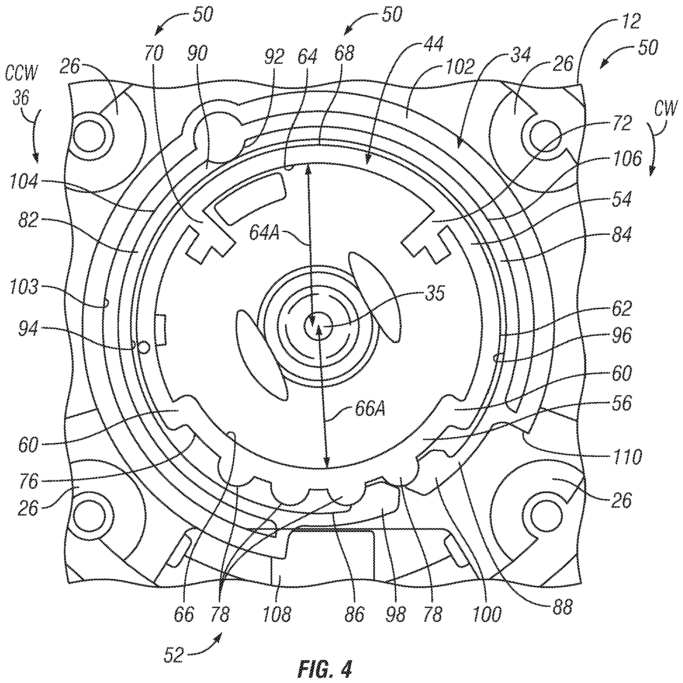

The endbell 44 illustratively includes piloting features 50 and indexing features 52 that interface with the control knob 34, as best seen in FIG. 4. The piloting features 50 interface with the knob 34 to guide rotation of the control knob 34 relative to the tool housing 12 about the knob axis 35 between the mode positions 36. The indexing features 52 interface with the knob 34 to provide haptic feedback to the user as the knob 34 is rotated between the mode positions 36, thereby indicating the positional state of the knob 34 to the user.

The piloting and indexing features 50, 52 of the endbell 44 provide a number of benefits. For example, because the features 50, 52 are provided internally of the exterior of the housing 12, the size of the tool 10 may be reduce compared to the size of the tool 10 if the features 50, 52 were placed on the exterior of the housing 12. Additionally, because the features 50, 52 are formed on the endbell 44 located within the housing 12, additional components that might be required to provide the features 50, 52 on the outside of the housing 12 may be avoided, thereby decreasing the number of parts included in the tool 10.

Referring now to FIG. 4, the endbell 44 includes an arcuate piloting section 54 that extends partway around the knob axis 35. The endbell 44 also includes an arcuate indexing section 56 that extends partway around the knob axis 35. The sections 54, 56 are interconnected with one another through a pair of bridges 60 of the endbell 44 that extend radially inward toward the knob axis 35 from the section 54 to the section 56. Together, the sections 54, 56 and the bridges 60 define a ring 62 that extends continuously all the way around the knob axis 35. An inner surface 64 of the piloting section 54 is radially spaced from the knob axis 35 by a distance 64A. An inner surface 66 of the indexing section 56 is radially spaced from the knob axis 35 by a distance 66A that is illustratively less than the distance 64A.

The piloting section 54 of the endbell 44 includes an arcuate piloting surface 68 that is positioned opposite the inner surface 64 as shown in FIG. 4. As discussed in greater detail below, the piloting surface 68 is configured to engage the control knob 34 to support the control knob 34 and guide rotation of the knob 34 between the mode positions 36. As such, the piloting surface 68 provides one of the piloting features 50 of the endbell 44.

The piloting section 54 of the endbell 44 includes rotational stops 70, 72, also referred to herein as detents 70, 72, that are interconnected with and extend radially inward from the inner surface 64 toward the knob axis 35 as shown in FIG. 4. As discussed in greater detail below, the rotational stops 70, 72 are configured to engage the control knob 34 to constrain rotation of the knob 34 about the axis 35. As such, the rotational stops 70, 72 provide another of the piloting features 50 of the endbell 44.

The indexing section 56 of the endbell 44 includes an outer surface 76 that is positioned opposite the inner surface 66 as shown in FIG. 4. The indexing section 56 includes a number of arced protrusions or detents 78 that are interconnected with the outer surface 76 and extend radially outward therefrom away from the axis 35. As discussed in greater detail below, the protrusions or detents 78 are configured to engage the control knob 34 in each one of the mode positions 36 to provide feedback indicating the positional state of the knob 34. As such, the protrusions 78 provide indexing features 52 of the endbell 44.

Referring back to FIG. 3, the control knob 34 is arranged adjacent the endbell 44 so that the piloting and indexing features 50, 52 of the endbell 44 are received in an interior cavity 80 defined by the control knob 34. The interior cavity 80 is cooperatively defined by arcuate interior walls 82, 84 and cantilevered arms 98, 100 of the control knob 34 coupled to the respective walls 82, 84, as best seen in FIG. 4. As described in greater detail below, each of the arms 98, 100 is configured to engage one of the protrusions 78 in each of the mode positions 36 of the knob 34 to provide feedback indicating the positional state of the knob 34.

Referring again to FIG. 4, the interior walls 82, 84 of the knob 34 extend partway around the knob axis 35 from respective ends 86, 88 to respective ends 90, 92 that are positioned opposite the ends 86, 88 as shown in FIG. 4. The walls 82, 84 are not directly connected to one another. Ends 86, 88 are spaced from one another and ends 90, 92 are also spaced from one another. An inner surface 94 of the wall 82 extends between the ends 86, 90 of the wall 82, and an inner surface 96 of the wall 84 extends between the ends 88, 92 of the wall 84. The cantilevered arm 98 is coupled to the end 86 of the wall 82 and extends radially inward therefrom toward the axis 35. The cantilevered arm 100 is coupled to the end 88 of the wall 84 and extends radially inward therefrom toward the axis 35. The cantilevered arms 98, 100 are configured to cooperatively engage one of the protrusions 78 in each of the mode positions 36 of the knob 34, as described in greater detail below.

The control knob 34 includes an arcuate exterior wall 102 that extends partway around the knob axis 35 and is interconnected with each of the interior walls 82, 84, as shown in FIG. 4. Specifically, an inner surface 103 of the exterior wall 102 is interconnected with an outer surface 104 of the wall 82 that is positioned opposite the inner surface 94, and with an outer surface 106 of the wall 84 that is positioned opposite the inner surface 96. Opposite ends 108, 110 of the exterior wall 102 extend radially inward toward the knob axis 35 to interconnect with the outer surfaces 104, 106 of the walls 82, 84. The inner surface 103 is spaced from and positioned radially outward of the outer surfaces 104, 106 of the walls 82, 84 between the ends 108, 110.

Referring still to FIG. 4, interaction of the indexing features 52 of the endbell 44 and the cantilevered arms 98, 100 of the knob 34 will now be described. In each of the mode positions 36 of the knob 34, the cantilevered arms 98, 100 are engaged with one of the protrusions 78 so that interference exists between the one of the protrusions 78 and the arms 98, 100. Four protrusions 78 are illustratively provided to establish interference with the arms 98, 100 in each of the four mode positions 36, and therefore each of the protrusions 78 corresponds to a specific mode position 36. When the knob 34 is rotated to one of the mode positions 36, the interference causes the arms 98, 100 to be deflected radially outward away from the axis 35. Such deflection is detectable by the user touching the knob 34, and as such, the protrusions 78 and the arms 98, 100 provide haptic feedback to the user indicating the positional state of the knob 34.

Referring still to FIG. 4, interaction of the piloting features 50 of the endbell 44 and the control knob 34 will now be described. In each of the mode positions 36 of the knob 34, the piloting surface 68 of the endbell 44 is engaged with the inner surfaces 94, 96 of the knob 34 to support the knob 34 for rotation about the axis 35. Additionally, as the knob 34 is rotated between each of its mode positions 36, the piloting surface 68 is engaged with the inner surfaces 94, 96 to guide rotation of the knob 34 between the positions 36. When the knob 34 has been rotated to its clockwise-most mode position 36CW (see FIG. 2), the knob 34 is engaged with the rotational stop 72 to prevent the knob 34 from further rotation in the clockwise direction indicated by arrow CW. When the knob 34 has been rotated to its counterclockwise-most mode position 36 CCW (see also, FIG. 2), the knob 34 is engaged with the rotational stop 70 to prevent the knob 34 from further rotation in the counterclockwise direction indicated by arrow CCW.

In some embodiments, rather than being provided as four protrusions (e.g., the four protrusions 78), the indexing features 52 of the endbell 44 may be provided as four arms like the cantilevered arms 98, 100. In such embodiments, the control knob 34 may include two protrusions (i.e., like the protrusions 78) rather than two cantilevered arms (i.e., like the arms 98, 100) that are deflectable to provide haptic feedback to the user indicating the positional state of the knob 34.

In some embodiments, the piloting feature 50 (i.e., the piloting surface 68) of the endbell 44 may engage the exterior wall 102 of the control knob 34 rather than the interior walls 82, 84. In such embodiments, the interior walls 82, 84 may be removed, and the cantilevered arms 98, 100 may be directly connected to the exterior wall 102 rather than the interior walls 82, 84.

In some embodiments, the piloting feature 50 (i.e., the detents 70, 72) of the endbell 44 may be embodied as a slot that is configured to receive a corresponding feature (e.g., a key) of the control knob 34 as the control knob 34 is rotated between the mode positions 36. The opposite ends of the slot may constrain rotation of the control knob 34 similar to the detents 70, 72.

While certain illustrative embodiments have been described in detail in the figures and the foregoing description, such an illustration and description is to be considered as exemplary and not restrictive in character, it being understood that only illustrative embodiments have been shown and described and that all changes and modifications that come within the scope the invention are desired to be protected. There are a plurality of advantages of the present disclosure arising from the various features of the apparatus, systems, and methods described herein. It will be noted that alternative embodiments of the apparatus, systems, and methods of the present disclosure may not include all of the features described yet still benefit from at least some of the advantages of such features. Those of ordinary skill in the art may readily devise their own implementations of the apparatus, systems, and methods that incorporate one or more of the features of the present disclosure.

## Claims

1. A hand-held power tool (10) comprising:
a housing assembly (12) supporting an electric motor (20) having a rotor (38) configured to rotate when the electric motor (20) is supplied with power;
an output spindle protruding from an output end (24) of the housing assembly;
wherein the output spindle is functionally coupled to the rotor (38) such that the output spindle rotates in response to a rotation of the rotor (38);
a motor endbell (44, 46) located on the housing assembly (12) adjacent the electric motor (20) and opposite the output spindle; and
a user interface (32) located on the motor endbell (44, 46) opposite the output spindle;
**characterized in that** the user interface (32) is configured to select one of a plurality of modes of operation of the hand-held power tool (10) to regulate power supplied to the electric motor (20), and wherein the user interface (32) includes a control knob (34) accessible from exterior of the housing assembly (12);
wherein the control knob (34) is rotatable about a knob axis (35) to a plurality of mode positions (36) that controls a plurality of operation modes.

2. The hand-held power tool (10) of Claim 1,
wherein the control knob (34) includes a lever that is configured to be pivoted by a hand;
wherein the motor endbell (44, 46) further includes piloting features (50) located adjacent to and interact with the control knob (34) to guide rotation of the control knob (34) relative to the housing assembly about the knob axis (35) to the plurality of mode positions (36);
wherein the piloting features (50) include an arcuate guide (68) about which the control knob (34) rotates such that the control knob (34) cooperatively defines the shape of the arcuate guide (68);
wherein the motor endbell (44, 46) further includes indexing features (52) located on the arcuate guide (68) as a plurality of selective stops (78);
wherein each of the plurality of selective stops (78) is configured to interact with at least one arm (98, 100) on the control knob (34) to provide haptic feedback when the control knob (34) is rotated to each of the plurality of selective stops (78) to define the plurality of mode positions (36) which indicate positional states of the control knob (34) corresponding to the plurality of operation modes.

3. The hand-held power tool (10) of Claim 2, wherein the at least one arm (98, 100) is a plurality of arms (98, 100).

4. The hand-held power tool (10) of Claim 2, wherein the at least one arm (98, 100) are first and second arms (98, 100), each configured to engage one of the selective stops (78) that define the plurality of mode positions (36) for the control knob (34) to provide feedback indicating the positional state of the control knob (34) at one of the plurality of operation modes.

5. The hand-held power tool (10) of Claim 4, wherein the first and second arms (98, 100) are cantilevered arms (98, 100) coupled to the control knob (34) and extend radially inward therefrom toward the knob axis (35), wherein when the control knob (34) is rotated to one of the plurality of mode positions (36), wherein interference causes the first and second arms (98, 100) to be deflected radially outward away from the knob axis (35) such that the deflection is detectable by the hand touching the control knob (34), which provide the haptic feedback indicating the positional state of the control knob (34).

6. The hand-held power tool (10) of any one of Claims 2 to 5, wherein the control knob (34) further includes an interior cavity (80), wherein the piloting and indexing features (50, 52) of the motor endbell (44, 46) are received in the interior cavity (80).

7. The hand-held power tool (10) of any one of Claims 2 to 6, wherein the plurality of selective stops (78) are a plurality of detents (78); and
preferably:
wherein the plurality of detents (78) interconnects with and extends radially outward from the knob axis (35), and wherein the detents (78) are spaced apart from each other; and/or
wherein the arcuate guide (68) includes a reduced radius section (56) with respect to the knob axis (35) at a location adjacent the plurality of detents (78).

8. The hand-held power tool (10) of any one of Claims 2 to 7, wherein the arcuate guide (68) of the motor endbell (44, 46) further includes two end stops (70, 72) with the plurality of selective stops (78) located between the two end stops (70, 72).

9. The hand-held power tool (10) of any one of Claims 2 to 8, wherein the arcuate guide (68) is circular.

10. The hand-held power tool (10) of any one of Claims 2 to 9, wherein the knob axis (35) is located parallel or coincident to an axis of rotation (48) of the rotor (38).

11. The hand-held power tool (10) of any one of Claims 2 to 10, wherein the control knob (34) is also located adjacent to a cap (16) configured to shroud an interior space (18) at an end of the hand-held power tool (10) opposite the output end, wherein the control knob (34) is rotatable relative to the cap (16) to the plurality of mode positions (36).

12. The hand-held power tool (10) of any one of Claims 2 to 11, wherein the control knob (34) is rotatable to select one of the plurality of operation modes to regulate a maximum power supplied to the electric motor (20) when a trigger (30), spaced apart from the control knob (34), is depressed.

13. The hand-held power tool (10) of any one of Claims 2 to 12, wherein the control knob (34) includes an arcuate exterior wall (102) that extends at least partway around the knob axis (35) and is connected to first and second interior walls (82, 84), wherein an inner surface (103) of the arcuate exterior wall (102) is also connected to an outer surface (104) of the first interior wall (82), and to an outer surface (106) of the second interior wall (84), wherein opposite ends (108, 110) of the arcuate exterior wall (102) extend radially inward toward the knob axis (35) to connect to the outer surfaces (104, 106) of the first and second interior walls (82, 84), respectively, and wherein the inner surface (103) of the arcuate exterior wall (102) is spaced apart from and positioned radially outward of the outer surfaces (104, 106) of the first and second interior walls (82, 84) between the opposite ends (108, 110) of the arcuate exterior wall (102).

14. The hand-held power tool (10) of any one of the preceding claims, wherein the motor endbell (44, 46) is configured to position the rotor (38) relative to a stator (42) of the electric motor (20).

15. The hand-held power tool (10) of any one of the preceding claims, wherein the plurality of operation modes are selected from the group consisting of a first power level, a second power level that is greater than the first power level, a third power level which is greater than the second power level, and a fourth power level that is greater than the third power level.

## Patentansprüche

1. Handgehaltenes Elektrowerkzeug (10), umfassend:
eine Gehäuseanordnung (12), die einen Elektromotor (20) trägt, der einen Rotor (38) aufweist, der konfiguriert ist, um zu drehen, wenn dem Elektromotor (20) Strom zugeführt wird;
eine Abtriebsspindel, die von einem Abtriebsende (24) der Gehäuseanordnung hervorsteht;
wobei die Abtriebsspindel funktionell mit dem Rotor (38) gekoppelt ist, sodass die Abtriebsspindel als Reaktion auf eine Drehung des Rotors (38) dreht;
ein Motorendgehäuse (44, 46), das sich an der Gehäuseanordnung (12) anliegend an dem Elektromotor (20) und gegenüber der Abtriebsspindel befindet; und
eine Benutzeroberfläche (32), die sich an dem Motorendgehäuse (44, 46) gegenüber der Abtriebsspindel befindet;
**dadurch gekennzeichnet, dass** die Benutzeroberfläche (32) konfiguriert ist, um eine von einer Vielzahl von Betriebsmodi des handgehaltenen Elektrowerkzeugs (10) auszuwählen, um dem Elektromotor (20) zugeführten Strom zu regulieren, und wobei die Benutzeroberfläche (32) einen Steuerknopf (34) beinhaltet, der von außerhalb der Gehäuseanordnung (12) zugänglich ist;
wobei der Steuerknopf (34) um eine Knopfachse (35) in eine Vielzahl von Moduspositionen (36) gedreht werden kann, die eine Vielzahl von Betriebsmodi steuern.

2. Handgehaltenes Elektrowerkzeug (10) gemäß Anspruch 1,
wobei der Steuerknopf (34) einen Hebel beinhaltet, der konfiguriert ist, um durch eine Hand geschwenkt zu werden;
wobei das Motorendgehäuse (44, 46) ferner Steuereinrichtungen (50) aufweist, die sich anliegend an dem Steuerknopf (34) befinden und damit interagieren, um eine Drehung des Steuerknopfs (34) in Bezug auf die Gehäuseanordnung um die Knopfachse (35) in die Vielzahl von Moduspositionen (36) zu führen;
wobei die Steuereinrichtungen (50) eine bogenförmige Führung (68) beinhalten, um die der Steuerknopf (34) dreht, sodass der Steuerknopf (34) zusammenwirkend die Form der bogenförmigen Führung (68) definiert;
wobei das Motorendgehäuse (44, 46) ferner Indexierungseinrichtungen (52) beinhaltet, die sich als eine Vielzahl von selektiven Anschlägen (78) an der bogenförmigen Führung (68) befinden;
wobei jeder der Vielzahl von selektiven Anschlägen (78) konfiguriert ist, um mit mindestens einem Arm (98, 100) an dem Steuerknopf (34) zu interagieren, um eine haptische Rückmeldung bereitzustellen, wenn der Steuerknopf (34) zu jedem der Vielzahl von selektiven Anschlägen (78) gedreht wird, um die Vielzahl von Moduspositionen (36) zu definieren, die Positionszustände des Steuerknopfs (34) entsprechend der Vielzahl von Betriebsmodi angeben.

3. Handgehaltenes Elektrowerkzeug (10) gemäß Anspruch 2, wobei der mindestens eine Arm (98, 100) eine Vielzahl von Armen (98, 100) ist.

4. Handgehaltenes Elektrowerkzeug (10) gemäß Anspruch 2, wobei der mindestens eine Arm (98, 100) ein erster und ein zweiter Arm (98, 100) sind, die jeweils konfiguriert sind, um in einen der selektiven Anschläge (78) einzugreifen, die die Vielzahl von Moduspositionen (36) für den Steuerknopf (34) definieren, um eine Rückmeldung bereitzustellen, die den Positionszustand des Steuerknopfs (34) in einem der Vielzahl von Betriebsmodi angibt.

5. Handgehaltenes Elektrowerkzeug (10) gemäß Anspruch 4, wobei der erste und der zweite Arm (98, 100) freitragende Arme (98, 100) sind, die mit dem Steuerknopf (34) gekoppelt sind und sich davon radial einwärts in Richtung der Knopfachse (35) erstrecken, wobei, wenn der Steuerknopf (34) in eine der Vielzahl von Moduspositionen (36) gedreht wird, wobei eine Interferenz bewirkt, dass der erste und der zweite Arm (98, 100) radial auswärts weg von der Knopfachse (35) ausgelenkt werden, sodass die Auslenkung durch die Hand erfassbar ist, die den Steuerknopf (34) berührt, was die haptische Rückmeldung bereitstellt, die den Positionszustand des Steuerknopfs (34) angibt.

6. Handgehaltenes Elektrowerkzeug (10) gemäß einem der Ansprüche 2 bis 5, wobei der Steuerknopf (34) ferner einen inneren Hohlraum (80) beinhaltet, wobei die Steuer- und Indexierungseinrichtungen (50, 52) des Motorendgehäuses (44, 46) in dem inneren Hohlraum (80) aufgenommen sind.

7. Handgehaltenes Elektrowerkzeug (10) gemäß einem der Ansprüche 2 bis 6, wobei die Vielzahl von selektiven Anschlägen (78) eine Vielzahl von Arretierungen (78) ist; und
vorzugsweise:
wobei die Vielzahl von Arretierungen (78) mit der Knopfachse (35) verbunden ist und sich von dieser radial auswärts davon erstreckt, und wobei die Arretierungen (78) voneinander beabstandet sind; und/oder
wobei die bogenförmige Führung (68) einen Abschnitt reduzierten Radiusses (56) in Bezug auf die Knopfachse (35) an einer Stelle anliegend an der Vielzahl von Arretierungen (78) beinhaltet.

8. Handgehaltenes Elektrowerkzeug (10) gemäß einem der Ansprüche 2 bis 7, wobei die bogenförmige Führung (68) des Motorendgehäuses (44, 46) ferner zwei Endanschläge (70, 72) beinhaltet, wobei sich die Vielzahl von selektiven Anschlägen (78) zwischen den zwei Endanschlägen (70, 72) befindet.

9. Handgehaltenes Elektrowerkzeug (10) gemäß einem der Ansprüche 2 bis 8, wobei die bogenförmige Führung (68) kreisförmig ist.

10. Handgehaltenes Elektrowerkzeug (10) gemäß einem der Ansprüche 2 bis 9, wobei sich die Knopfachse (35) parallel oder übereinstimmend mit einer Drehachse (48) des Rotors (38) befindet.

11. Handgehaltenes Elektrowerkzeug (10) gemäß einem der Ansprüche 2 bis 10, wobei sich der Steuerknopf (34) auch anliegend an einer Kappe (16) befindet, die konfiguriert ist, um einen Innenraum (18) an einem Ende des handgehaltenen Elektrowerkzeugs (10) gegenüber dem Abtriebsende ummantelt, wobei der Steuerknopf (34) in Bezug auf die Kappe (16) in die Vielzahl von Moduspositionen (36) gedreht werden kann.

12. Handgehaltenes Elektrowerkzeug (10) gemäß einem der Ansprüche 2 bis 11, wobei der Steuerknopf (34) gedreht werden kann, um einen der Vielzahl von Betriebsmodi auszuwählen, um eine dem Elektromotor (20) zugeführte maximale Leistung zu regulieren, wenn ein vom Steuerknopf (34) beabstandeter Auslöser (30) gedrückt wird.

13. Handgehaltenes Elektrowerkzeug (10) gemäß einem der Ansprüche 2 bis 12, wobei der Steuerknopf (34) eine bogenförmige Außenwand (102) beinhaltet, die sich zumindest teilweise um die Knopfachse (35) erstreckt und mit einer ersten und einer zweiten Innenwand (82, 84) verbunden ist, wobei eine Innenfläche (103) der bogenförmigen Außenwand (102) auch mit einer Außenfläche (104) der ersten Innenwand (82) und mit einer Außenfläche (106) der zweiten Innenwand (84) verbunden ist, wobei gegenüberliegende Enden (108, 110) der bogenförmigen Außenwand (102) sich radial einwärts in Richtung der Knopfachse (35) erstrecken, um sich mit den Außenflächen (104, 106) der ersten bzw. der zweiten Innenwand (82, 84) zu verbinden, und wobei die Innenfläche (103) der bogenförmigen Außenwand (102) von den Außenflächen (104, 106) der ersten und zweiten Innenwand (82, 84) zwischen den gegenüberliegenden Enden (108, 110) der bogenförmigen Außenwand (102) beabstandet und radial auswärts davon positioniert ist.

14. Handgehaltenes Elektrowerkzeug (10) gemäß einem der vorherigen Ansprüche, wobei das Motorendgehäuse (44, 46) konfiguriert ist, um den Rotor (38) in Bezug auf einen Stator (42) des Elektromotors (20) zu positionieren.

15. Handgehaltenes Elektrowerkzeug (10) gemäß einem der vorherigen Ansprüche, wobei die Vielzahl von Betriebsmodi aus der Gruppe ausgewählt sind, bestehend aus einer ersten Leistungsstufe, einer zweiten Leistungsstufe, die größer ist als die erste Leistungsstufe, einer dritten Leistungsstufe, die größer ist als die zweite Leistungsstufe, und einer vierten Leistungsstufe, die größer ist als die dritte Leistungsstufe.

## Revendications

1. Un outil électrique portatif (10) comprenant :
un ensemble boîtier (12) supportant un moteur électrique (20) ayant un rotor (38) configuré pour tourner lorsque le moteur électrique (20) est alimenté en énergie ;
une broche de sortie faisant saillie à partir d'une extrémité de sortie (24) de l'ensemble boîtier ;
dans lequel la broche de sortie est couplée fonctionnellement au rotor (38) de sorte que la broche de sortie tourne en réponse à une rotation du rotor (38) ;
une cloche d'extrémité de moteur (44, 46) située sur l'ensemble boîtier (12) adjacent au moteur électrique (20) et opposé à la broche de sortie ; et
une interface utilisateur (32) située sur la cloche d'extrémité de moteur (44, 46) opposée à la broche de sortie ;
**caractérisé en ce que** l'interface utilisateur (32) est configurée pour sélectionner un parmi une pluralité de modes de fonctionnement de l'outil électrique portatif (10) pour réguler l'énergie fournie au moteur électrique (20), et dans lequel l'interface utilisateur (32) comprend un bouton de contrôle (34) accessible à partir de l'extérieur de l'ensemble boîtier (12) ;
dans lequel le bouton de contrôle (34) peut tourner autour d'un axe de bouton (35) vers une pluralité de positions de mode (36) qui contrôle une pluralité de modes de fonctionnement.

2. L'outil électrique portatif (10) selon la revendication 1,
dans lequel le bouton de contrôle (34) comprend un levier qui est configuré pour être pivoté par une main ;
dans lequel la cloche d'extrémité de moteur (44, 46) comprend en outre des dispositifs de pilotage (50) situés de manière adjacente au bouton de contrôle (34) et interagissant avec celui-ci pour guider la rotation du bouton de contrôle (34) par rapport à l'ensemble boîtier autour de l'axe de bouton (35) vers la pluralité de positions de mode (36) ;
dans lequel les dispositifs de pilotage (50) comprennent un guide arqué (68) autour duquel le bouton de contrôle (34) tourne de sorte que le bouton de contrôle (34) définit en coopération la forme du guide arqué (68) ;
dans lequel la cloche d'extrémité de moteur (44, 46) comprend en outre des dispositifs d'indexation (52) situés sur le guide arqué (68) comme une pluralité de butées sélectives (78) ;
dans lequel chacune de la pluralité de butées sélectives (78) est configurée pour interagir avec au moins un seul bras (98, 100) sur le bouton de contrôle (34) pour fournir une rétroaction haptique lorsque le bouton de contrôle (34) est tourné vers chacune de la pluralité de butées sélectives (78) pour définir la pluralité de positions de mode (36) qui indiquent les états de position du bouton de contrôle (34) correspondant à la pluralité de modes de fonctionnement.

3. L'outil électrique portatif (10) selon la revendication 2, dans lequel l'au moins un seul bras (98, 100) est une pluralité de bras (98, 100).

4. L'outil électrique portatif (10) selon la revendication 2, dans lequel l'au moins un seul bras (98, 100) est un premier et un deuxième bras (98, 100), chacun configuré pour engager une des butées sélectives (78) qui définissent la pluralité de positions de mode (36) pour le bouton de contrôle (34) pour fournir une rétroaction indiquant l'état de position du bouton de contrôle (34) à un de la pluralité de modes de fonctionnement.

5. L'outil électrique portatif (10) selon la revendication 4, dans lequel les premier et deuxième bras (98, 100) sont des bras en porte-à-faux (98, 100) couplés au bouton de contrôle (34) et s'étendent radialement vers l'intérieur à partir de celui-ci vers l'axe de bouton (35), dans lequel lorsque le bouton de contrôle (34) est tourné vers une de la pluralité de positions de mode (36), dans lequel l'interférence amène les premier et deuxième bras (98, 100) à être déviés radialement vers l'extérieur loin de l'axe de bouton (35) de sorte que la déviation est détectable par la main touchant le bouton de contrôle (34), qui fournit la rétroaction haptique indiquant l'état de position du bouton de contrôle (34).

6. L'outil électrique portatif (10) selon l'une quelconque des revendications 2 à 5, dans lequel le bouton de contrôle (34) comprend en outre une cavité intérieure (80), dans lequel les dispositifs de pilotage et d'indexation (50, 52) de la cloche d'extrémité de moteur (44, 46) sont reçus dans la cavité intérieure (80).

7. L'outil électrique portatif (10) selon l'une quelconque des revendications 2 à 6, dans lequel la pluralité de butées sélectives (78) est une pluralité de détentes (78) ; et
de préférence :
dans lequel la pluralité de détentes (78) s'interconnecte avec l'axe de bouton (35) et s'étend radialement vers l'extérieur à partir de celui-ci, et dans lequel les détentes (78) sont espacées les unes des autres ; et / ou
dans lequel le guide arqué (68) comprend une section de rayon réduit (56) par rapport à l'axe de bouton (35) à un emplacement adjacent à la pluralité de détentes (78).

8. L'outil électrique portatif (10) selon l'une quelconque des revendications 2 à 7, dans lequel le guide arqué (68) de la cloche d'extrémité de moteur (44, 46) comprend en outre deux butées d'extrémité (70, 72) avec la pluralité de butées sélectives (78) situées entre les deux butées d'extrémité (70, 72).

9. L'outil électrique portatif (10) selon l'une quelconque des revendications 2 à 8, dans lequel le guide arqué (68) est circulaire.

10. L'outil électrique portatif (10) selon l'une quelconque des revendications 2 à 9, dans lequel l'axe de bouton (35) est situé parallèlement ou en coïncidence avec un axe de rotation (48) du rotor (38).

11. L'outil électrique portatif (10) selon l'une quelconque des revendications 2 à 10, dans lequel le bouton de contrôle (34) est également situé de manière adjacente à un capuchon (16) configuré pour envelopper un espace intérieur (18) à une extrémité de l'outil électrique portatif (10) opposée à l'extrémité de sortie, dans lequel le bouton de contrôle (34) peut tourner par rapport au capuchon (16) vers la pluralité de positions de mode (36).

12. L'outil électrique portatif (10) selon l'une quelconque des revendications 2 à 11, dans lequel le bouton de contrôle (34) peut être tourné pour sélectionner un de la pluralité de modes de fonctionnement pour réguler une énergie maximale fournie au moteur électrique (20) lorsqu'un déclencheur (30), espacé du bouton de contrôle (34), est enfoncé.

13. L'outil électrique portatif (10) selon l'une quelconque des revendications 2 à 12, dans lequel le bouton de contrôle (34) comprend une paroi extérieure arquée (102) qui s'étend au moins en partie autour de l'axe de bouton (35) et est reliée aux première et deuxième parois intérieures (82, 84), dans lequel une surface intérieure (103) de la paroi extérieure arquée (102) est également reliée à une surface extérieure (104) de la première paroi intérieure (82), et à une surface extérieure (106) de la deuxième paroi intérieure (84), dans lequel les extrémités opposées (108, 110) de la paroi extérieure arquée (102) s'étendent radialement vers l'intérieur vers l'axe de bouton (35) pour se relier aux surfaces extérieures (104, 106) des première et deuxième parois intérieures (82, 84), respectivement, et dans lequel la surface intérieure (103) de la paroi extérieure arquée (102) est espacée des surfaces extérieures (104, 106) des première et deuxième parois intérieures (82, 84) et positionnée radialement vers l'extérieur de celles-ci entre les extrémités opposées (108, 110) de la paroi extérieure arquée (102).

14. L'outil électrique portatif (10) selon l'une quelconque des revendications précédentes, dans lequel la cloche d'extrémité de moteur (44, 46) est configurée pour positionner le rotor (38) par rapport à un stator (42) du moteur électrique (20).

15. L'outil électrique portatif (10) selon l'une quelconque des revendications précédentes, dans lequel la pluralité de modes de fonctionnement sont sélectionnés dans le groupe constitué d'un premier niveau d'énergie, d'un deuxième niveau d'énergie qui est supérieur au premier niveau d'énergie, d'un troisième niveau d'énergie qui est supérieur au deuxième niveau d'énergie, et d'un quatrième niveau d'énergie qui est supérieur au troisième niveau d'énergie.
